# EUROPÄISCHE PATENTANMELDUNG

(11) **EP 2 273 343 A1**
(43) Veröffentlichungstag der Anmeldung: **12.01.2011**
(21) Anmeldenummer: 09009073.9
(22) Anmeldetag: 10.07.2009
(51) Int. Cl.: G06F 1/16, G01C 21/00

(54) **Blendschutz für Navigationsgeräte**

(71) Anmelder: Richter, Harald, 75331 Engelsbrand (DE)
(72) Erfinder: Richter, Harald, 75331 Engelsbrand (DE)
(74) Vertreter: Gallo, Wolfgang

(57) **Zusammenfassung**

Blendschutzvorrichtung für Navigationsgeräte oder Ähnliches, bestehend aus einem Blendschutzwandkörper mit kopfstehender U-Form mit einer horizontalen oberen Wand (1) und zwei von deren beiderseitigen Enden abwärts verlaufenden Seitenwänden (2), und mit Mitteln (31) zum wahlweisen Aufstecken der Blendschutzvorrichtung auf ein damit auszustattendes Gerät, wobei die Seitenwände (2) jeweils mittels eines Scharniers (21) zwischen einer von der oberen Wand (1) abwärts verlaufenden Gebrauchsstellung und einer einwärts in Anlage an die Unterseite der oberen Wand eingeklappten unwirksamen Stellung schwenkbar an der oberen Wand (1) angeordnet sind.

## Beschreibung

Die Erfindung betrifft eine Blendschutzvorrichtung für Bildschirme mobiler elektronischer Geräte, wie beispielsweise in Fahrzeugen benutzten Navigationsgeräte.

Der Nutzen von Navigationsgeräten im Fahrzeug ist nicht zuletzt davon abhängig, dass die Anzeige auf dem Bildschirm leicht und klar für den Fahrer erkennbar ist. Die heute vielfach verbreiteten mobilen Navigationsgeräte werden im Fahrzeug üblicherweise auf einem Geräteträger gehaltert, der einen Tragarm mit einem beispielsweise an der Windschutzscheibe befestigbaren Saugfuß oder einem anderen Befestigungsfuß aufweist, und wobei der Arm entweder in sich einstellbar ausgebildet ist, beispielsweise als Schwanenhals, oder über einen einstellbaren und arretierbaren Gelenkmechanismus mit einer Halteplatte oder einem Klemmbackenhalter oder dergleichen verbunden ist, um das Navigationsgerät in einer für den Fahrer zweckmäßigen und gut sichtbaren Position zu halten.

Oft wird aber im praktischen Gebrauch das Ablesen der Bildschirmanzeige dadurch erschwert oder sogar ganz unmöglich gemacht, dass einfallendes Fremdlicht in Gestalt greller Sonneneinstrahlung eine mehr oder weniger starke Blendwirkung erzeugt.

Es ist bereits bekannt, diesem Problem dadurch entgegenzuwirken, dass auf die Gerätefront ein Blendschutz aufgesetzt wird, der als Wandkörper mit kopfstehender U-Form mit einer horizontalen oberen Blendschutzwand und zwei sich daran anschließenden seitlichen Blendschutzwänden ausgebildet ist, und der Federklammern zum bedarfsweisen Aufstecken auf das Gerät aufweist.

Derartige bekannte Blendschutzvorrichtungen bringen zwar eine gewisse Verbesserung des Problems, sind aber bei weitem nicht optimal. Denn jede solche Blendschutzvorrichtung stellt natürlich auch eine Sichtbehinderung dar, weil sie die Sichtbarkeit des Bildschirms des Geräts verschlechtert, indem sie bei schrägem Blickwinkel Teile des Bildschirms verdeckt. Bekannte derartige Blendschutzvorrichtungen stellen daher einen Kompromiss dar. Für eine gute Blendschutzwirkung müssten sowohl die obere Wand als auch die Seitenwände eine möglichst große Tiefe haben, aber je größer die Tiefe der Wände ist, desto stärker ist auch die Sichtbehinderung. Deshalb haben solche bekannten Blendschutzvorrichtungen Blendschutzwände mit nur relativ geringer Tiefe, so dass die Sichtbehinderung nicht sehr stark, die Blendschutzwirkung allerdings nur sehr mäßig ist, und der Blendschutz gänzlich versagt, wenn der Fremdlichteinfall aus einem größeren Winkel von der einen oder anderen Seite her von rückwärts erfolgt.

Aufgabe der Erfindung ist es daher, eine Blendschutzvornchtung zu schaffen, die einerseits einen wirklich guten und effektiven Blendschutz bietet, andererseits aber hinsichtlich der dadurch erzeugten Behinderung der Sicht auf den Bildschirm des Geräts minimiert ist.

Diese Aufgabe wird erfindungsgemäß durch die im Anspruch 1 angegebene Anordnung gelöst. Vorteilhafte Ausgestaltungen der Erfindung sind Gegenstand der Unteransprüche.

Die erfindungsgemäße Konzeption sieht vor, dass die seitlichen Blendschutzwände klappbar an der oberen Blendschutzwand angeordnet sind, und dass darüber hinaus vorzugsweise die seitlichen Blendschutzwände an seitwärts ausziehbaren Elementen der oberer Blendschutzwand angeordnet sind.

Dadurch ergeben sich mehrere Vorteile, die den Nutzen der Blendschutzvorrichtung entscheidend verbessern.

Zum einen trägt die Erfindung dem Umstand Rechnung, dass das eine Blendwirkung erzeugende Fremdlicht immer nur entweder von der einen Seite oder von der anderen Seite her einfällt, was bedeutet, dass immer nur die linke oder die rechte seitliche Blendschutzwand notwendig ist, wenn das Fremdlicht von links oder rechts einfällt. Die nicht benötigte Seitenwand kann dann nach oben in Anlage an die obere Wand geklappt werden, so dass dann diese Seitenwand überhaupt kein die Sicht auf den Bildschirm beeinträchtigendes Hindernis mehr darstellt. Zum anderen ermöglicht eine Anordnung der Seitenwände an seitwärts ausziehbaren Elementen der oberen Wand nicht nur eine Anpassung der effektiven Breite der Blendschutzvorrichtung an Navigations- oder andere Bildschirmgeräte mit unterschiedlich breitem Bildschirm, sondern sie ermöglicht auch ein seitliches Verschieben der linken Seitenwand, wenn diese zum Schutz gegen Blendung durch von links einfallendes Fremdlicht notwendig ist, das Gerät sich aber rechts von Fahrer befindet und aus seinem Blickwinkel sonst ein Teil des Bildschirms verdeckt wäre.

Die Anpassbarkeit der Breite der Blendschutzvorrichtung ist insbesondere auch unter dem Gesichtspunkt vorteilhaft, dass manche der gängigen Navigationsgeräte einen im Querformat betriebenen Bildschirm, andere aber einen im Hochformat betriebenen Bildschirm benutzen.

Mit der erfindungsgemäßen Ausbildung ist es möglich, die Blendschutzvorrichtung mit einer großen Tiefe der Blendschutzwände auszubilden und damit für eine sehr effiziente Blendschutzwirkung zu sorgen.

Ein Ausführungsbeispiel der Erfindung wird nachstehend unter Bezugnahme auf die anliegenden Zeichnungen mehr im einzelnen beschrieben. In den Zeichnungen zeigt:
- Fig. 1: eine perspektivische Ansicht der erfindungsgemäßen Blendschutzvor- richtung von vom,
- Fig. 2: eine perspektivische Ansicht der Blendschutzvorrichtung schräg von unten und von vorne,

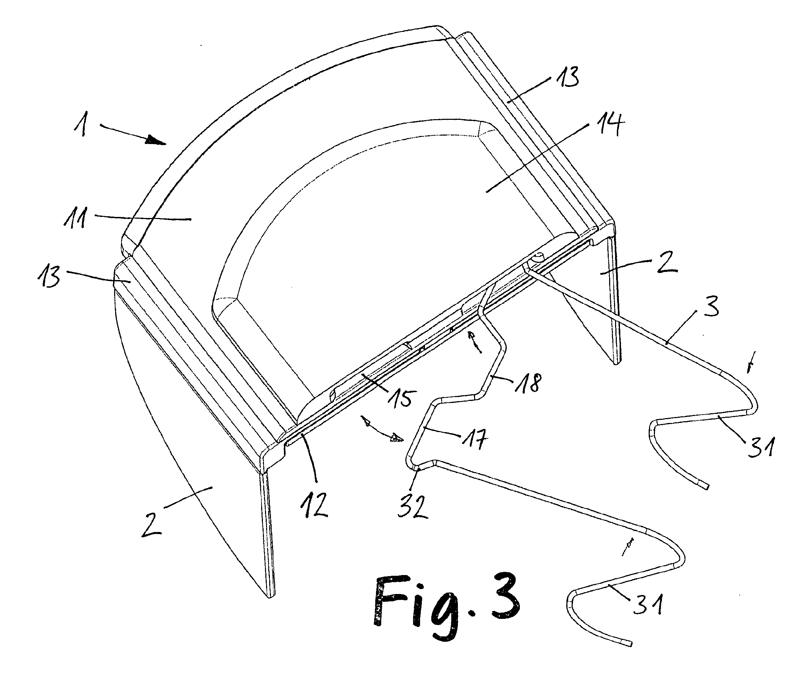

- Fig. 3: eine perspektivische Ansicht der Blendschutzvorrichtung schräg von oben und von hinten, und
- Fig. 4: in perspektivischer Untersicht die verstellbare Halterung eines Feder- bügels in der Blendschutzvorrichtung.

Die in den Zeichnungen dargestellte erfindungsgemäße Blendschutzvorrichtung weist ein oberes horizontales Wandteil 1 und zwei beiderseitige einklappbare Seitenwandteile 2 auf.

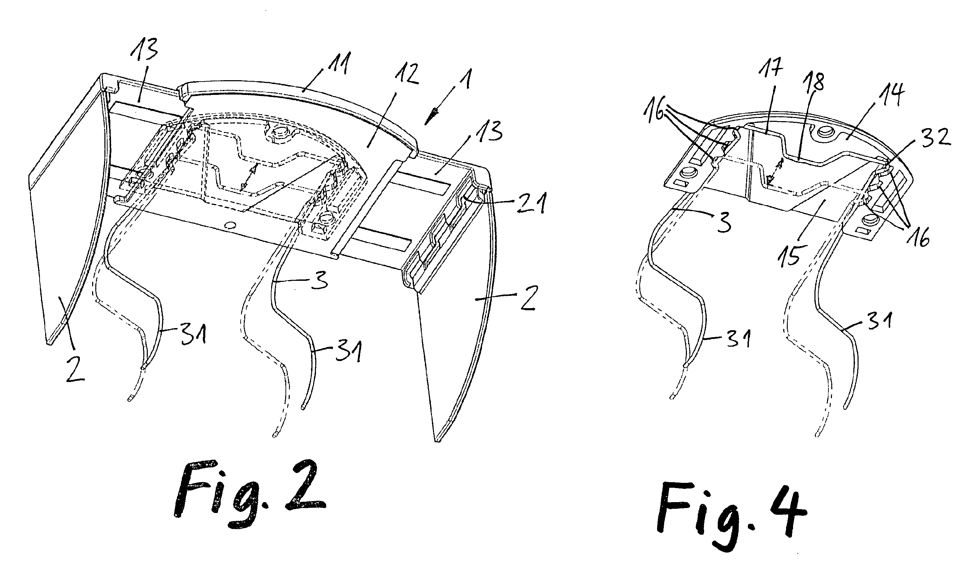

Das obere Wandteil 1 besteht aus einem Führungsgehäuse, das aus einem Oberteil 11 und einem Unterteil 12 (letzteres in Fig. 2 sichtbar) zusammengesetzt ist, und aus zwei in dem Führungsgehäuse verschiebbar aufgenommenen, jeweils seitwärts ausziehbaren Auszugselementen 13. Das jeweilige klappbare Seitenteil 2 ist am freien Ende des entsprechenden Auszugselements 13 mittels eines Scharniers 21 angelenkt und zwischen einer vertikal nach unten weisenden Gebrauchsstellung und einer einwärts in Anlage an die Unterseite des oberen Wandteils 1 geklappten Ruhestellung klappbar.

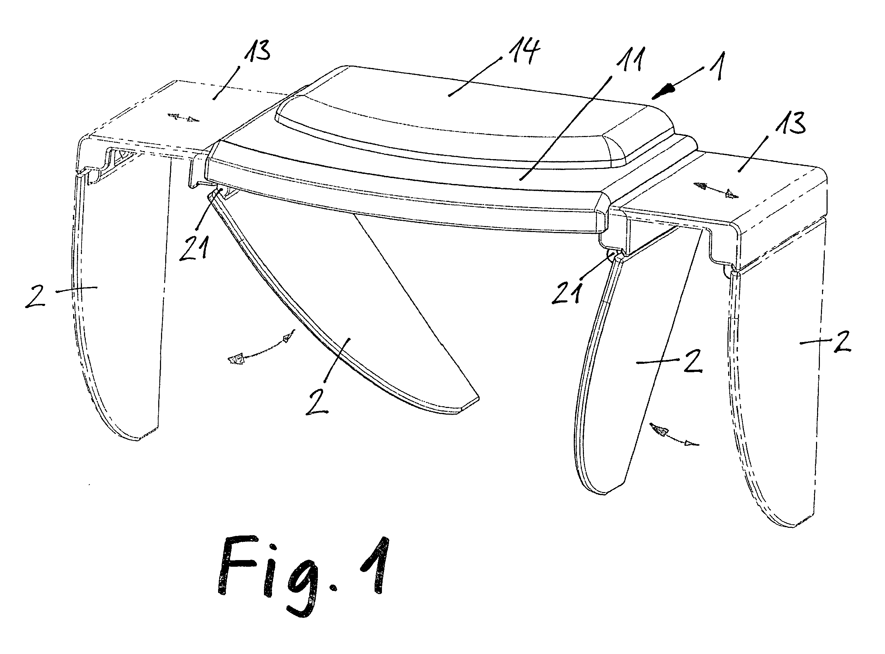

Fig. 1 zeigt zur Veranschaulichung die Anordnung in Volllinien ausgezogen mit jeweils vollständig in das Führungsgehäuse eingeschobenen Auszugselementen 13 und den daran angeordneten Seitenteilen 2, wobei Pfeile die Schwenkbbarkeit der Seitenteile 2 andeuten, und zusätzlich in strichpunktierten Linien die Auszugselemente 13 in der jeweils seitwärts ausgezogenen Position, jeweils wiederum mit den daran angeordneten Seitenteilen 2.

Auf dem Oberteil 11 des Führungsgehäuses 11, 12 ist noch ein Deckel 14 aufgesetzt, der zur Aufnahme eines aus Federdraht gebogenen Federbügels 3 (Fig. 2 und 4) dient, mittels welchem die Blendschutzvorrichtung auf ein Gerät wahlweise aufgesteckt werden kann. Dieser in Fig. 1 in der Perspektive schräg von oben sichtbare Deckel 14 ist in Fig. 4 in perspektivischer Untersicht gezeigt. Dieser Deckel 14 bildet zusammen mit der Oberseite des Oberteils 11 eine flache Aufnahmekammer 15 für den U-förmigen Mittelbereich des Federbügels 3, von welchem dann die beiden jeweils eine Federklammer bildenden Schenkel 31 herausragen.

An den Seitenwänden der flachen Kammer 15 im Deckel 14 sind jeweils eine Reihe von beim Ausführungsbeispiel drei seitliche Ausbuchtungen 16 gebildet, die Rastöffnungen darstellen, in welche am Federbügel 3 beiderseits in Gestalt eines jeweils seitlich überstehenden Biegebogens 32 angeformte Rastnasen eingreifen können. Der die beiden Schenkel 31 verbindende U-Verbindungssteg 17 hat in seinem Mittenbereich eine große Einbuchtung 18, die dem Federbügel eine entsprechende Federelastizität in Querrichtung verleiht, so dass der sich in dem flachen Hohlraum 15 befindende U-Bereich des Federbügels 3 in die jeweils geeigneten Rastöffnungen 16 einrasten läst, so dass die die jeweils geeigneten Rastöffnungen 16 einrasten läst, so dass die Federklammern bildenden Schenkel 31 jeweils mehr oder weniger weit nach rückwärts von der Blendschutzvorrichtung überstehen, je nach Dicke des Geräts einschließlich des zugehörigen Halters.

## Patentansprüche

1. Blendschutzvorrichtung für Navigationsgeräte oder Ähnliches, bestehend aus einem Blendschutzwandkörper mit kopfstehender U-Form mit einer horizontalen oberen Wand (1) und zwei von deren beiderseitigen Enden abwärts verlaufenden Seitenwänden (2), und mit Mitteln (31) zum wahlweisen Aufstecken der Blendschutzvorrichtung auf ein damit auszustattendes Gerät,
**dadurch gekennzeichnet, dass** die Seitenwände (2) jeweils mittels eines Scharniers (21) zwischen einer von der oberen Wand (1) abwärts verlaufenden Gebrauchsstellung und einer einwärts in Anlage an die Unterseite der oberen Wand eingeklappten unwirksamen Stellung schwenkbar an der oberen Wand (1) angeordnet sind.

2. Blendschutzvorrichtung nach Anspruch 2, wobei die obere Wand (1) in ihrer Ausdehnung zwischen den beiden Seitenwänden (2) durch gegeneinander verschiebbare Elemente (13) veränderlich ist.

3. Blendschutzvorrichtung nach Anspruch 2, wobei die obere Wand einen als Führungsgehäuse ausgebildeten Mittelteil (11, 12) aufweist, in welchem zwei beiderseits ausziehbare Auszugselemente (13) verschiebbar geführt sind, mit deren freien Enden die Seitenwände (2) jeweils mittels des Scharniers (21) verbunden sind.

4. Blendschutzvorrichtung nach Anspruch 3, wobei das Führungsgehäuse durch ein Oberteil (11) und ein Unterteil (12) gebildet ist, die miteinander verbindbar sind und zwischen sich Führungskanäle für die Auszugselemente (13) bilden.

5. Blendschutzvorrichtung nach einem der Ansprüche 1 bis 4, wobei die Mittel zum Aufstecken als aus Federdraht gebogener U-förmiger Federbügel (3) ausgebildet sind, dessen U-Bereich in eine Öffnung der oberen Wand (1) einstecktbar ist und dessen jeweils eine Federklammer bildende Schenkel (31) rückwärts aus der Öffnung herausragen.

6. Blendschutzvorrichtung nach den Ansprüchen 4 und 5, wobei die Öffnung in der oberen Wand (1) zur Aufnahme des U-Bereichs des Federbügels (3) durch den flachen Innenraum (15) eines auf die obere Wand (1) aufgesetzten Deckels (14) gebildet ist.

7. Blendschutzvorrichtung nach Anspruch 6, wobei der U-Bereich des Federbügels (3) mit mindestens einem als Rastelement dienenden angeformten Formelement (32) versehen ist, das wahlweise mit einem von mehreren in der Öffnung gebildeten Rastvertiefungen (16) zusammenwirken kann.

8. Blendschutzvorrichtung nach Anspruch 7, wobei der U-Bereich des Federbügels (3) mit zwei beiderseits als auswärts ausgebuchtete Bogenelemente angeformten Formelementen (32) ausgebildet ist, die mit zwei Reihen von beiderseits in den seitlichen Öffnungswänden angeformten Reihen von Rastvertiefungen (16) zusammenwirken können, und wobei der U-Bereich des Federbügels durch einen Ausgleichsbogen (18) in sich in Querrichtung federelastisch ausgebildet ist.
